# EUROPÄISCHE PATENTSCHRIFT

(11) **EP 0 648 630 B1**
(45) Veröffentlichungstag und Bekanntmachung des Hinweises auf die Patenterteilung: **20.11.1996**
(21) Anmeldenummer: 94111513.1
(22) Anmeldetag: 23.07.1994
(51) Int. Cl.: B60J 7/12

(54) **Cabriolet-Verdeck**
Foldable top for convertible
Capote pour cabriolet

(30) Priorität: 15.10.1993 DE 9315758 U
(43) Veröffentlichungstag der Anmeldung: 19.04.1995
(73) Patentinhaber: Wilhelm Karmann GmbH, D-49084 Osnabrück (DE)
(72) Erfinder: Prenger, Rainer, D-49076 Osnabrück (DE); Nissen, Uwe, D-33803 Steinhagen (DE)
(74) Vertreter: Busse & Busse Patentanwälte

(56) Entgegenhaltungen:
- EP-A- 0 332 811
- EP-A- 0 521 307
- US-A- 4 573 732

## Beschreibung

Die Erfindung bezieht sich auf ein Verdeck für Cabriolet-Fahrzeuge gemäß dem Oberbegriff des Anspruchs 1.

Ein derartiges Verdeck ist aus EP-A-0 521 307 bekannt.

Bei bekannten Cabriolet-Fahrzeugen bestehen die Verdeckgestelle aus einer Schweißkonstruktion aus Stahl. Der die Dachspitze und das vordere Dachrahmenteil umfassende Zusammenbau besteht hierbei aus sechs Teilen, der das hintere Dachrahmenteil unfassende Zusammenbau weist vier Komponeten auf und der Zusammenbau Hauptsäule ist aus sechs Teilen zusammengesetzt. Außerdem sind die Aufnahmen für die Verdeckverschlüsse separat ausgebildet.

Der Erfindung liegt die Aufgabe zugrunde, ein Verdeck der im Oberbegriff des Anspruchs 1 genannten Art zu schaffen, das sich durch eine wesentlich geringere Anzahl an Bauteilkomponenten für das Verdeckgestell und ein die Handhabung erleichterndes geringeres Gewicht auszeichnet.

Diese Aufgabe wird durch die im Anspruch 1 angegebenen Merkmale gelöst. In den Ansprüchen 2 bis 5 sind vorteilhafte Ausgestaltungen der Erfindung angegeben.

Die erfindungsgemäße Ausbildung ermöglicht insgesamt eine wesentliche Reduzierung der Bauteilkomponenten für das Verdeckgestell und auch des Gewichts. Aufwendige Schweißarbeiten beim Zusammenbau des Gestells entfallen, wodurch die Qualität des Verdeckgestells insgesamt verbessert werden kann, da die beim Schweißen unvermeidlich auftretenden Fertigungstoleranzen entfallen. Außerdem läßt sich das Verdeck durch den Fortfall des lohnintensiven Schweißens kostengünstiger herstellen. Darüber hinaus kann die Anbindung an die übrigen Bauteile des Verdeckgestänges einfacher gestaltet werden.

Weitere Einzelheiten und Vorteile der Erfindung ergeben sich aus der nachfolgenden Beschreibung und der Zeichnung, die ein Ausführungsbeispiel des Gegenstands der Erfindung schematisch veranschaulicht. In der Zeichnung zeigen:
- Fig. 1: eine perspektivische Gesamtansicht eines Verdeckgestells nach der Erfindung,
- Fig. 2: eine vergrößerte, perspektivische Darstellung eines ersten Bauteils des Gestells nach Fig. 1,
- Fig. 3: eine vergrößerte, perspektivische Darstellung eines zweiten Bauteils des Gestells nach Fig. 1,
- Fig. 4: eine vergrößerte, perspektivische Darstellung eines dritten Bauteils des Gestells nach Fig. 1.

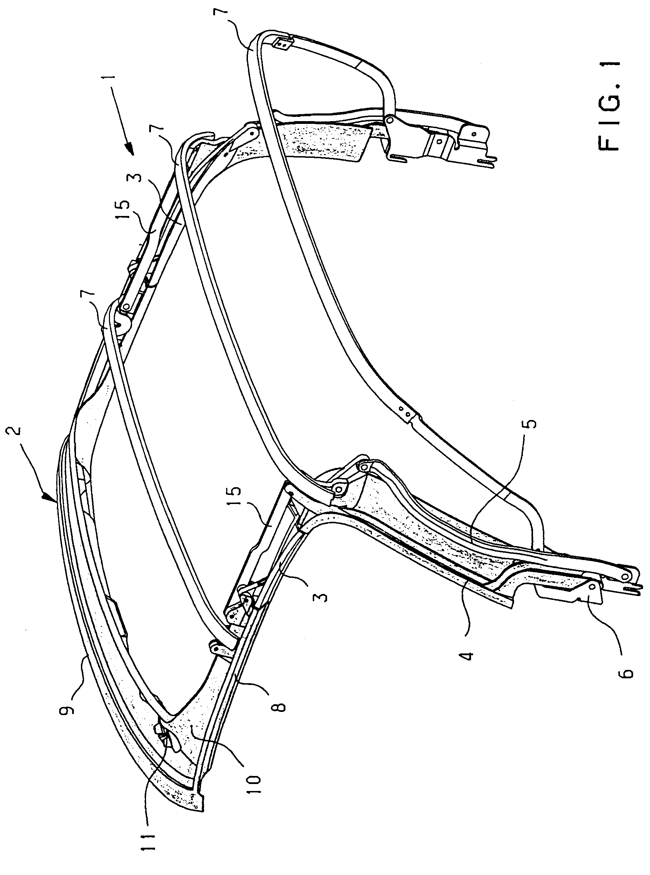

Das in Fig. 1 allgemein mit 1 bezeichnete Verdeckgestell besteht aus einem vorderen Trägerteil 2, zwei hinteren Dachrahmenteilen 3, zwei Hauptsäulen 4, zwei Führungsstangen 5 und zwei Hauptlagern 6. Außerdem sind zur Befestigung des Verdeckstoffes in üblicher Weise Spriegel 7 vorgesehen.

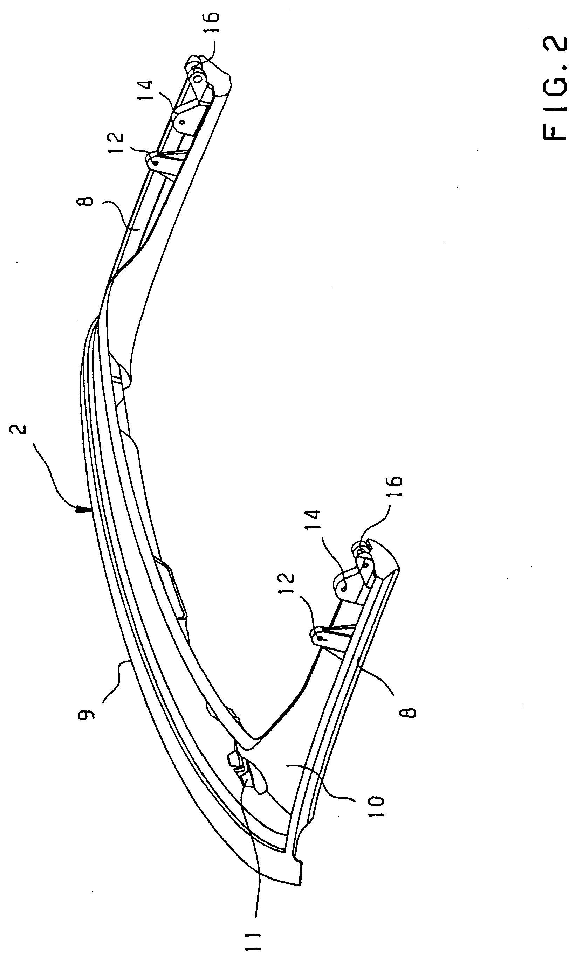

Wie weiter insbesondere aus Fig. 2 ersichtlich, ist das Trägerteil 2 als einstückiges Formteil aus vorzugsweise Druckguß (z.B. Aluminium-Druckguß) ausgebildet und U-förmig gestaltet. Den Basissteg bildet die Dachspitze 9, die beim Verschließen des Verdecks am oberen Querholm einer Windschutzscheibe des Fahrzeugs anliegt. An die Dachspitze 9 schließt sich zu beiden Seiten jeweils ein vorderes Dachrahmenteil 8 an. Zwischen der Dachspitze 9 und den vorderen Dachrahmenteilen 8 ist jeweils eine Verbindungszone 10 ausgebildet, die eine Aufnahme 11 für den Verdeckschluß aufweist.

Im Bereich der freien Enden der vorderen Dachrahmenteile 8 befinden sich Verbindungselemente zu den übrigen Komponenten des Verdeckgestells 1. So ist hier ein Aufnahmedrehpunkt 12 für den vorderen Spriegel 7 vorgesehen, der - wie in Fig. 1 veranschaulicht - in diesem Bereich über die beiden vorderen Dachrahmenteile 8 gespannt ist. Außerdem weisen die freien Enden der vorderen Dachrahmenteile 8 Aufnahmedrehpunkte 14 für eine Dachspitzen-Führungsstange 15 auf. Darüber hinaus sind hier Elemente 16 für eine mechanische Gelenkverbindung und mit dem jeweils aufschließenden hinteren Dachrahmenteil 3 angeordnet.

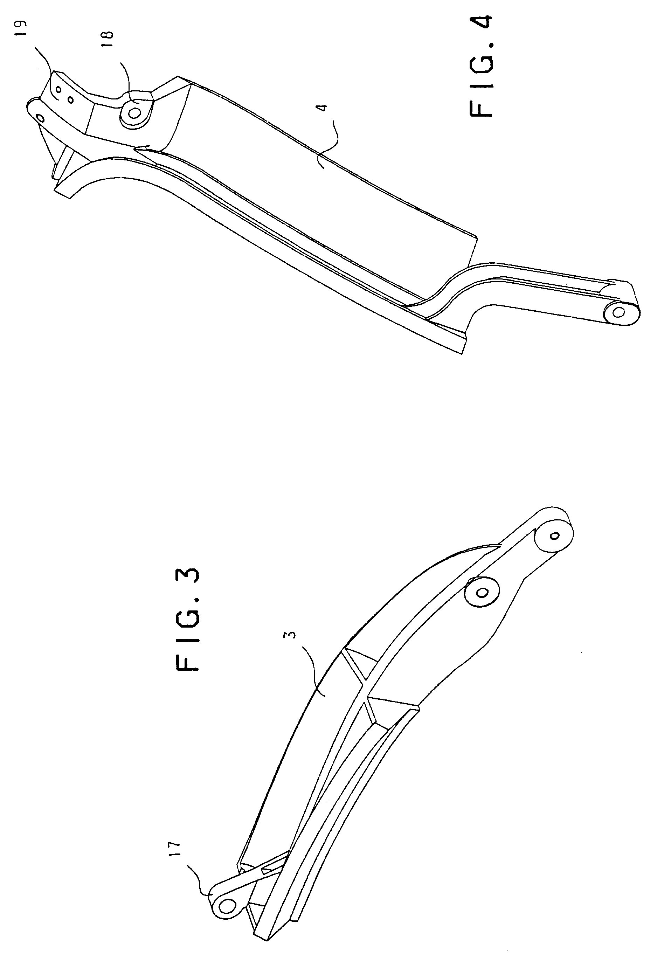

Das sich an die vorderen Dachrahmenteile 8 jeweils anschließende hintere Dachrahmenteil 3 ist aus Fig. 3 ersichtlich. Auch dieses hintere Dachrahmenteil 3 ist vorteilhaft ebenfalls als einstückiges Formteil ausgebildet und besteht zweckmäßig ebenso wie das Trägerteil 2 aus Aluminium-Druckguß. Der dem vorderen Dachrahmenteil 8 zugewandte Bereich des hinteren Dachrahmenteils 3 weist eine zum Verbindungselment 16 korrespondierendes Verbindungselment 17 auf, wodurch sich die beiden Dachrahmenteile 8,3 auf mechanische Weise (z. B. mittels Gelenkbolzen) miteinander verbinden lassen.

Die mit den hinteren Dachrahmenteilen 3 jeweils verbindbare Hauptsäule 4 ist aus Fig. 4 ersichtlich. Auch diese Hauptsäule 4 ist vorteilhaft als einstückiges Formteil aus Aluminium-Druckguß ausgebildet. Die Hauptsäule weist Verbindungselemente 18 zur mechanischen Befestigung am hinteren Dachrahmenteil 3 sowie Aufnahmen 19 für den Hauptspriegel 7 auf.

Wie aus Vorstehendem ersichtlich, läßt sich bei einem erfindungsgemäßen Verdeckgestell die Zahl der Bauteile, aus denen es aufgebaut ist, erheblich reduzieren und der Zusammenbau der einzelnen Elemente zum Verdeckgestell wesentlich vereinfachen. Die hierdurch verbesserten Fertigungstoleranzen erhöhen die Qualität des Verdecks im Ganzen und verbessern die Möglichkeiten für die Befestigung von Verdeckanbauteilen, wie z. B. Klemm- und Einfaßschienen. Die Herstellung der Hauptkomponenten aus Aluminium-Druckguß bedeutet in erster Linie eine Gewichtsreduzierung, was die Handhabung des Verdecks erleichtert, aber auch die Recyclefähigkeit verbessert. Darüber hinaus können vor allem durch die Herstellung des Trägerteils aus Druckguß neue Designideen verwirklicht werden, indem z. B, das Trägerteil 2 so konzipiert wird, daß es im aufgeklappten Zustand des Verdecks zur Abdeckung der übrigen Gestängeteile und des Verdeckstoffs dient, was sowohl unter ästhetischen wie auch unter Sicherheits-Gesichtspunkten von Vorteil sein kann.

Neben Aluminium-Druckguß können auch Leichtbauwerkstoffe, wie z. B. Magnesium-Legierungen oder Verbundwerkstoffe (Kunststoff, Glasfaserkunststoffe) für die Herstellung der Verdeckkomponenten verwendet werden, da sie ähnliche Eigenschaften in bezug auf Gewicht und Festigkeit wie Aluminium-Druckguß aufweisen.

## Patentansprüche

1. Verdeck für Cabriolet-Fahrzeuge, mit einem Verdeckgestell (1), dessen jeweils symmetrisch zur Fahrzeuglängsachse angeordneten, aus vorderen und hinteren Teilstücken bestehenden Seitenrahmenteile (3,8) jeweils über eine Hauptsäule (4) und eine Hauptführungsstange (5) schwenkbeweglich an einem hinteren Hauptlager (6) des Karosserierahmens abgestützt sind und dessen Dachspitze (9) in Schließstellung am oberen Querholm eines Windschutzscheibenrahmens anliegt, **dadurch gekennzeichnet,** daß das Verdeckgestell (1) im vorderen Bereich als ein einstückiges Formträgerteil (2) mit U-förmiger Kontur ausgebildet ist, an dessen die Dachspitze (9) bildenden Basissteg über eine jeweilige Verbindungszone jeweils die vorderen Seitenrahmenteile (8) als Profilschenkel angeformt sind, die an ihren freien Enden jeweils zumindest ein zur Hauptsäule (4) hin gerichtetes Gelenkverbindungselement (16) aufweisen.

2. Verdeck nach Anspruch 1, **dadurch gekennzeichnet,** daß das Trägerteil (2) Aufnahmen (11) für die Verdeckverschlüsse aufweist.

3. Verdeck nach Anspruch 1, **dadurch gekennzeichnet,** daß die hinteren Seitenrahmenteile (3) und die Hauptsäulen (4) jeweils als einstückige Formteile ausgebildet sind.

4. Verdeck nach einem der Ansprüche 1 bis 3, **dadurch gekennzeichnet,** daß die Verbindungen zwischen den am Trägerteil (2) einstückig angeformten vorderen Seitenrahmenteilen (8) und den hinteren Seitenrahmenteilen (3) sowie die Verbindungen zwischen den hinteren Seitenrahmenteilen (3) und der jeweiligen Hauptsäule (4) als mechanische Verbindungen ausgeführt sind.

5. Verdeck nach einem der Ansprüche 1 bis 4, **dadurch gekennzeichnet,** daß das Trägerteil (2), die beiden hinteren Seitenrahmenteile (3) und die zwei Hauptsäulen (4) des Verdeckgestänges (1) aus Aluminium-Druckguß oder einem ähnlichen Leichtbauwerkstoff hergestellt sind.

## Claims

1. A top for cabriolet vehicles, with a top frame (1) the side frame parts (3, 8) of which each consisting of front and rear parts which are disposed respectively symmetrically in respect of the longitudinal axis through the vehicle, are each supported via a main pillar (4) and a main guide rod (5) for pivoting movement on a rear main mounting (6) on the body flame and of which the apex (9) of the roof, when in the closed position, bears on the upper transverse member of a windscreen frame, characterised in that the top frame (1) is in its front portion constructed as a one-piece moulded carrier part (2) of U-shaped contour and has on its base web, which forms the roof apex (9), front side frame parts (8) which are integrally formed as profiled members, via respective connecting zones, said profiled members having at their free ends at least one respective articulating element (16) which is directed towards the main pillar (4).

2. A top according to claim 1, characterised in that the carrier part (2) has seatings (11) for the top closure means.

3. A top according to claim 1, characterised in that the rear side frame part (3) and the main pillars (4) are in each case constructed as one-piece moulded parts.

4. A top according to one of claims 1 to 3, characterised in that the connections between the front side frame parts (8) are integrally moulded in one piece in the carrier part (2) and the rear side frame parts (3) as well as the connections between the rear side frame parts (3) and the respective main pillar (4) are constructed as mechanical connections.

5. A top according to one of claims 1 to 4, characterised in that the carrier part (2), the two rear side frame parts (3) and the two main pillars (4) of the top linkage (1) are produced from pressure die cast aluminium or a similar lightweight structural material.

## Revendications

1. Capote pour cabriolet, équipée d'une armature (1) comportant :
- de chaque côté et symétriquement par rapport à l'axe longitudinal du véhicule, une partie de cadre latéral (3, 8) constituée de pièces élémentaires avant et arrière,
- chaque partie de cadre latéral (3, 8) est montée basculant sur un palier principal arrière (6) de la carrosserie, par l'intermédiaire d'une colonne principale (4) et d'une barre de guidage principal (5),
- une pointe de toit (9) reposant, en position de fermeture, sur la traverse supérieure du cadre de pare-brise,
caractérisée en ce que
l'armature (1) est, en avant, constituée par une pièce porteuse moulée monobloc (2) ayant un contour en forme d'un U dont la base constitue la pointe de toit (9), sur laquelle, par l'intermédiaire d'une zone de liaison, est moulée chacune des pièces avant (8) de cadre latéral sous forme d'aile profilée portant à son extrémité libre au moins un élément d'articulation (16) dirigé vers la colonne principale (4).

2. Capote selon la revendication 1,
caractérisée en ce que
la pièce porteuse (2) comporte des logements (11) pour recevoir les verrous de capote.

3. Capote selon la revendication 1,
caractérisée en ce que
les pièces arrière (3) du cadre latéral et les colonnes principales (4) sont des pièces monobloc moulées.

4. Capote selon une des revendications 1 à 3, caractérisée en ce que
les liaisons, entre les pièces avant (8) du cadre latéral moulées monobloc avec la pièce porteuse (2) et les pièces arrière (3) du cadre latéral ainsi que les liaisons entre ces pièces arrière (3) et les colonnes principales correspondantes (4), sont des liaisons mécaniques.

5. Capote selon une des revendications 1 à 4,
caractérisée en ce que
la pièce porteuse (2), les deux pièces arrière (3) du cadre latéral et les deux colonnes principales (4) de l'armature (1) de la capote sont réalisées en aluminium coulé sous pression ou en un matériau de construction léger analogue.
